(19) Europäisches Patentamt
European Patent Office
Office européen des brevets

(11) **EP 3 627 150 A1**

(12) **EUROPEAN PATENT APPLICATION**

(43) Date of publication:
**25.03.2020 Bulletin 2020/13**

(51) Int Cl.:
***G01N 30/60*** *(2006.01)*

(21) Application number: **18195681.4**

(22) Date of filing: **20.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(72) Inventors:
• **DE MALSCHE, Wim**
  **2600 Berchem (BE)**
• **DE WIT, Anne**
  **1050 Brussel (BE)**
• **RANA, Chinar**
  **Shelburne, Ontario L9V2S6 (CA)**

(74) Representative: **DenK iP**
  **Leuvensesteenweg 203**
  **3190 Boortmeerbeek (BE)**

(71) Applicants:
• **Vrije Universiteit Brussel**
  **1050 Brussel (BE)**
• **Universite Libre de Bruxelles**
  **1050 Bruxelles (BE)**

(54) **SEPARATION SYSTEMS AND METHODS**

(57) A separation system is described for separating analytes of interest in a fluid sample is described based on interaction with a stationary phase. The separation system comprises a fluidic channel and a stationary phase in the fluidic channel arranged for interacting with the sample, when the sample passes the fluidic channel.

The separation system is adapted for inducing for the sample of interest in the fluidic channel at least part of its residence time in the fluidic channel Langmuir behavior and at least part of its residence time in the fluidic channel Anti-Langmuir behavior.

**FIG. 1**

**Description**

**Field of the invention**

The invention relates to the field of separation. More specifically it relates to separation processes and systems involving the treatment of fluids with sorbents, such as solid sorbents.

**Background of the invention**

Adsorption based separation is very important in industry. Generally, the process uses a porous matrix as adsorbents/stationary phase. With an ever increasing need for a more efficient, energy-saving, and environmentally benign procedure for chemical separation, adsorbents with tailored structures and tunable surface properties must be used to yield high recovery. As a solute zone (or band) migrates along a porous matrix, it broadens due to a number of random processes, for instance solute dispersion, surface heterogeneity, interaction of solute with the surface etc. During the interaction of the solute with porous matrix via adsorption the band broadening also known as peak tailing occurs mainly due to non-linear/overloading adsorption isotherm and heterogeneous porous matrix. The individual effects of each of these sources and the conditions under which they enhance the solute spreading are well known. However, often these different sources combine resulting in complex behavior.

Many processes in nature and engineering applications occur in porous media and materials, for instance carbon capture and sequestration, separation of components of solutes from mixture (chromatography), recovery of oils from reservoir and contaminants transport in subsurface systems. Thus, porous media transport phenomena is an interdisciplinary issue of concern for environmental, petroleum, chemical, geological, civil, and mechanical engineers, physicists, materials scientists, as well as mathematicians. A rapid development in chemical, petrochemical and pharmaceutical industries have led to the endeavour of new techniques for generating high-purity compounds in the laboratory or industrial scale. The traditional techniques such as distillation, or centrifugal extraction, and crystallization used by the petroleum and the chemical industries do not meet the needs of the growing demands. On the other hand, the adsorption- or interaction-based separation method, that exploits the differences in affinity or retention of substances to a solid to separate a mixture into its constituents, is more versatile and better suited for the rapid production of milligram to ton quantities of products. During the adsorption process, the solute dissolved in the sample is retained on the porous matrix following the reversible adsorption-desorption reaction

$$A_m \xrightleftharpoons[k_d]{k_a} A_s$$

Here $A_m$ and $A_s$ represent the solute molecules in the mobile and stationary phases where their concentrations are equal to $c_m$ and $c_s$ respectively, while $k_a$ and $k_d$ are the adsorption and desorption kinetic constants. In the adsorption based separation processes a given fluid (called displacing fluid) displaces a miscible sample consisting of a mixture of solutes. The solutes are separated during the displacement because of selective adsorption of the components on the porous medium. Separation processes based on adsorption and interaction is one of the basic technology and in widespread use in liquid chromatography techniques.

A traditional separation technique based on a batch process includes a countercurrent between the flow and the solid. This allows a continuous mode of operation, and separation of adsorbed components through an extract flow from non-adsorbed or poorly adsorbed components, which are removed from the column in a raffinate flow. For example, a separating column can be physically moved in an implementation called 'true moving bed process'. A variation of this implementation, known as 'simulated moving bed processes', is based on shifting the inlets and outlets through a stationary separating column, instead of moving the column. However, these processes usually present low efficiency, because the separating column is usually overloaded in some areas, while other areas have low interaction with the solvent. US2005167365A1 shows a chromatography setup with several inlets and outlets along flow chambers, but the fluid through the setup changes during a cycle, e.g. increasing concentrations of the feed flows, and obtaining an increased productivity. However, this setup requires optimization of the process for each component, fluid and concentration thereof. The load conditions are limited and need to be finely tuned.

**Summary of the invention**

It is an object of embodiments of the present invention to provide a separation system and method for separating analytes of interest in a fluid sample, with high efficiency, where load conditions can be relaxed.

The above object is obtained with a method and/or system according to the present invention.

The present invention relates to a separation system for separating analytes of interest in a fluid sample based on interaction with a stationary phase, the separation system comprising a fluidic channel and a stationary phase in the fluidic channel arranged for interacting with the sample, when the sample passes the fluidic channel. The separation system is adapted for inducing for the sample of interest in the fluidic channel at least part of its residence time in the fluidic channel Langmuir behavior and at least part of its residence time in the fluidic channel Anti-Langmuir behavior.

It is an advantage of embodiments of the present invention that the load conditions for samples to be studied can be relaxed. In other words, overloading conditions due to the lack of interaction sites at the stationary phase can be overcome and correspondingly overloading dispersion can be limited.

It is an advantage of embodiments of the present invention that alternatingly different adsorption properties are introduced, resulting in different Langmuir and Anti-Langmuir conditions. By introducing these different behaviors, variation of the concentration of the analytes introduced by overloading conditions of the analyte in the sample is spread over the sample fluid plug rather than being concentrated upstream or downstream the center of the fluid plug.

The separation system may be adapted for inducing for the sample of interest during its residence time in the fluidic channel alternatingly Langmuir behavior and Anti-Langmuir behavior. By introducing alternatingly Langmuir behavior and Anti-Langmuir behavior, separation can be performed for samples with high analyte concentrations. It is an advantage that the limitation to work at low analyte concentration can be relaxed.

The separation system may be adapted for spatially along the fluidic channel at least one zone with Langmuir behavior and at least one zone with Anti-Langmuir behavior. It is an advantage of embodiments of the present invention that the different spatial zones in the fluidic channel can be introduced by selecting a different stationary phase.

The separation system may be adapted for introducing spatially along the fluidic channel alternatingly zones with Langmuir behavior and zones with Anti-Langmuir behavior. It is an advantage that the zones with Langmuir behavior and zones with Anti-Langmuir behavior can be introduced by varying the stationary phase in these zones. The separation system may be a separation column.

The first spatial zone may be a zone with Langmuir behavior.

The width of the different spatial zones may be selected for decreasing a spreading length of the concentration of the analytes.

The system may comprise a controller for controlling a sample speed as function of time so as to introduce temporary Langmuir or anti-Langmuir behavior in the sample.

The present invention also relates to a chromatography system comprising a separation system as described above.

The present invention furthermore also relates to the use of a separation system as described above, for separation of analytes from a sample for pharmaceutical industry, biotechnology or food-water-environmental control.

The present invention also relates to a method for separating analytes of interest in a fluid sample based on interaction with a stationary phase, the method comprising providing a sample in a fluidic channel with a stationary phase allowing the sample to interact with the stationary phase, wherein providing the sample comprises providing the sample in the fluidic channel whereby Langmuir behavior and Anti-Langmuir behavior is introduced for the sample.

Providing the sample may comprise providing a sample such that alternatingly Langmuir behavior and Anti-Langmuir behavior is introduced for the sample.

Providing the sample may comprise providing the sample in a fluidic channel comprising stationary phases introducing alternatingly zones of Langmuir behavior and zones of anti-Langmuir behavior.

The present invention also relates to a method for fabricating a separation system as described above, wherein the method comprises providing a fluidic channel, and providing in at least a first zone a first stationary phase adapted for introducing Langmuir behavior and providing in at least a second zone a second stationary phase adapted for introducing Anti-Langmuir behavior.

Providing the first stationary phase and the second stationary phase may comprise providing different types of stationary phases.

Providing the first stationary phase and the second stationary phase may comprise providing different packing of a stationary phase.

Providing the first stationary phase and the second stationary phase may comprise selectively removing parts of the stationary phase.

Selectively removing may comprise any o removing by radiation treatment or chemical treatment.

Providing the first stationary phase and the second stationary phase may comprise selectively coating of the stationary phase.

The present invention relates to a controller for controlling a sample fluid flow in a separation system, the controller being programmed for alternatingly varying the fluid flow so as to induce Langmuir and anti-Langmuir behavior in the separation system. The present invention also relates for a controller programmed for performing a method as described above.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 illustrates a graphical representation of the isotherms and the corresponding peaks in Langmuir and anti-Langmuir mode, as is used in embodiments according to the present invention.

FIG. 2 shows a plot indicating different positions of the sample at t = 0, i.e., $x_{in}$ illustrating features of embodiments of the present invention. The change in $r_d$ changes the $x_{in}$ with values varying from [0,2].

FIG. 3 shows a plot indicating the geometry of the column with different values of $r_p = W/L_p$ as a function of $c_m$ illustrating features of embodiments of the present invention. For a fixed value of W = 64, the increase in $r_p$ depicts decreasing plate width, thus the spatial distribution shows large number of plates for large $r_p$.

FIG. 4 shows concentration profiles in the mobile phase $c_m$ with $r_d = 0$ for (a) $r_p = 0.5$ (b) $r_p = 1$ (c) $r_p = 2$ at times t = 0, 1000, 2000, 3000, 4000, 5000, illustrating features of embodiments of the present invention.

FIG. 5 shows the spreading length of adsorbed solute for different values of $r_p$ at fixed $r_d = 0$, k = 5, $\delta = 1$, illustrating features of embodiments of the present invention.

FIG. 6 shows the spreading length $L_m$ for different initial position of the sample for $r_p = 1$ and k = 5, illustrating features of embodiments of the present invention.

FIG. 7 shows concentration profiles in the mobile phase $c_m$ with $r_p = 0$ for (a) $r_p = 0.5$ (b) $r_p = 1$ (c) $r_p = 1.5$ at times t = 0, 1000, 2000, 3000, 4000, 5000, illustrating features of embodiments of the present invention.

FIG. 8 shows (a) the concentration in mobile phase $c_m$ for 8 = 1 at different times for k = 1 (red) and for k = 5 (blue) with $r_d = 1$, $r_p = 1$, (b) illustrates the spreading length $L_m$ for different k = 5 and k = 1, $r_p = r_d = 1$, illustrating features of embodiments of the present invention.

FIG. 9 illustrates the concentration in the mobile phase $c_m$ for k = 5 at different times for $\delta = 0.5$ (blue), 1 (black) and 2 (red) with $r_d = 1$, $r_p = 1$,

FIG. 10 illustrate phase diagrams of Lm (t= $10^5$) as function of $r_p$ and $r_d$ with k = 5 for different values of $\delta$, as can be used in embodiments of the present invention.

FIG. 11 illustrate phase diagrams of Lm (t= 50000) as function of $r_p$ and $r_d$ with k = 1 for different values of $\delta$, as can be used in embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In embodiments of the present invention, it is aimed to reduce or minimize the band broadening in the separation process by choosing appropriate operating parameters in a model exploiting the very nature of solute interaction with porous matrix.

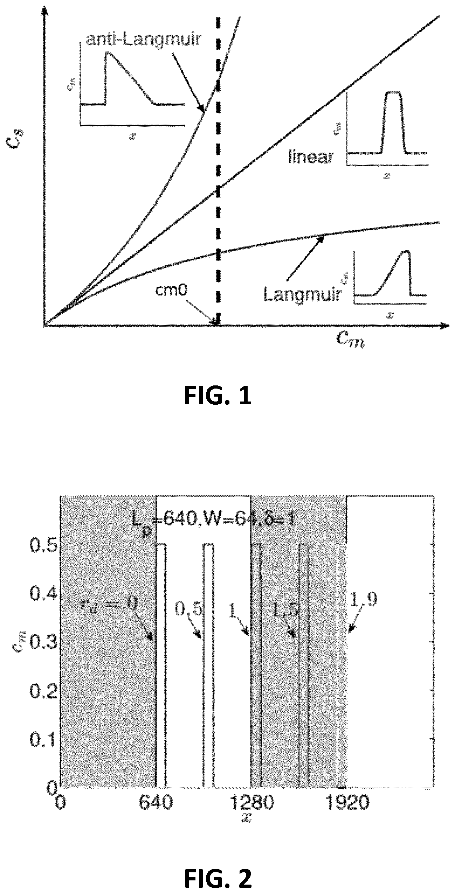

The spreading of the solute is largely dependent on the adsorption isotherms-the relation between the solute concentrations $c_s$ and $c_m$, which can be linear or nonlinear. In linear adsorption isotherm, the equilibrium concentrations of a component in the stationary and the mobile phases, $c_s$ and $c_m$ respectively, are proportional. In other words, the equilibrium isotherms are straight lines beginning at the origin given by the relation $c_s = Kc_m$, where $K = k_a/k_d$ is the equilibrium constant of the adsorption-desorption equilibrium. The solute retention is characterized by the retention factor $k = FK$, where $F = V_s/V_m = (1-\varepsilon_{tot}) = \varepsilon_{tot}$ is the phase ratio of the volume $V_s$ and $V_m$ of the stationary and mobile phases, where $\varepsilon_{tot}$ is the total porosity or void volume fraction of the porous medium. The linear isotherms result in a symmetric solute profile (see FIG.1). However, linear chromatography accounts for the phenomena as long as the injected amounts of the sample components are kept sufficiently low. In practically all the applications the concentration of a component in the stationary phase at equilibrium is no longer proportional to its concentration in the mobile phase. For the monolayer adsorption, the simplest nonlinear adsorption models are Langmuir and anti-Langmuir, as used in embodiments according to the present invention.

Langmuir isotherm assumes that there are fixed number of well-defined sites for molecules to be adsorbed upon and molecules do not interact with the neighboring sites. The amount of a component needed to saturate the stationary phase in the column is fixed by the nature of the porous matrix and it sets the saturation capacity of the stationary phase. The Langmuir model could be expressed as :

$$c_s = \frac{Kc_m}{1 + b_L c_m}$$

(2)

where $b_L = K/c_{sat}$ represents the rate at which the stationary phase concentration $c_s$ saturates to saturation capacity $c_{sat}$ of the column and $K$ is the associated equilibrium constant. The nonlinear adsorption of Langmuir type results in the formation of shock layer (SL-thin region of space where the concentration varies continuously, but rapidly, and propagates as a constant pattern) at the frontal interface and a rarefaction wave (RF-expanding wave) at the rear interface of the solute (see FIG.1).

The anti-Langmuir isotherm comes into picture when there is adsorbate-adsorbate interaction and thus the amount of adsorbate at equilibrium increases more rapidly than the concentration in the mobile phase. Anti-Langmuir isotherm is a convex downward in other words, it has an adsorption behavior which is opposite to that of Langmuir isotherm, where $c_s$ increases more rapidly with increase in $c_m$. Anti-Langmuir adsorption relation could be expressed as

$$c_s = \frac{K c_m}{1 - b_{AL} c_m}$$

(3)

The anti-Langmuir isotherm is valid till

$$c_m \leq \frac{1}{b_{AL}}$$

The concentration

$$c_{th} = \frac{1}{b_{AL}}$$

is termed as the threshold concentration of the column. The nonlinear adsorption of anti-Langmuir type result in formation of SL at the rear interface and RF wave at the frontal interface (see FIG.1)

These peaks with the rear (front) being spread out to a greater extent, forming a tail - phenomena called as peak tailing, results in further addition to the band broadening and thus it impairs the resolution of the column. As the peaks become wider and asymmetric, therefore efforts are being made to eliminate or reduce the peak tailing effects.

Though most of the systems with Langmuir or anti-Langmuir models give an appropriate representation of the adsorbed behavior, it has been observed that not all systems conform to these isotherms. Deviations occur mostly due to heterogeneity of the porous matrix. On such surfaces, the adsorption can be described by a combination of one or two models, thus may have entirely different types of interaction with the solute. The bi-Langmuir, multi-Langmuir isotherms, competitive Langmuir isotherm, the Tóth isotherm, and the Freundlich isotherm are a few examples of the models most often used. The simplest model for a non-homogeneous surface is a patched surface covered with patches having two different kind of retention property. These two surfaces covered with chemical groups to create patches which may exhibit similar interaction with the solute but with different retention or they may exhibit entirely different type of interaction. An example of such surface is found with the chiral stationary phases (CSP) where there is selective retention of one enantiomer with respect to the other one, thus different enantiomers of the same solute show different affinity to the CSP. On a heterogeneous surface with two adsorption sites, the peak tailing from both the sites combine if one of the adsorption site is weaker than the other. Further, a radial heterogeneity also found to influence the peak tailing in relation to the column efficiency. An experimental study of heterogeneous surface with micropillar array chips reveal a significant increase in band broadening due to disordered array. Thus, as a consequence heterogeneity (two site, radial or micro pillar) of the surface the solute spreading is affected. Therefore, the aim is to exploit this influence of surface heterogeneity. Embodiments of the present invention are based on a model with a multi-site adsorption with a purpose to reduce the solute spreading for better resolution of separated components.

The present invention relates to a separation system for separating analytes of interest in a fluid sample based on interaction with a stationary phase, the separation system comprising a fluidic channel and a stationary phase in the fluidic channel arranged for interacting with the sample, when the sample passes the fluidic channel. The separation system is adapted for inducing for the sample of interest in the fluidic channel at least part of its residence time in the fluidic channel Langmuir behavior and at least part of its residence time in the fluidic channel Anti-Langmuir behavior. It is to be noted that separation systems according to the present invention can relate to microfluidic devices, e.g. for use in chromatographic systems, pharmaceutical industry, biotechnology as well as to macroscopic separation systems as for example can be used in waste water applications or food-water-environmental control, etc. The separation system may be adapted for inducing for the sample of interest during its residence time in the fluidic channel alternatingly Langmuir behavior and Anti-Langmuir behavior. The latter can be done by adapting the separation system for providing spatially along the fluidic channel at least one zone with Langmuir behavior and at least one zone with Anti-Langmuir behavior. The first spatial zone may be a zone with Langmuir behavior, although embodiments are not limited thereto and alternatively this may be a zone with Anti-Langmuir behavior. The width of the different spatial zones may be selected for decreasing a spreading length of the concentration of the analytes. Alternatively or in addition thereto, the system also may comprises a controller for controlling a sample speed as function of time so as to introduce temporary Langmuir or anti-Langmuir behavior in the sample.

Further features and advantages may be as shown with respect to the examples illustrated below.

In a second aspect, the present invention relates to a chromatography system comprising a separation system as describe in the first aspect. Standard and optional components of chromatography systems are further known to the person skilled in the art and therefore are not repeated here. Advantages and features of embodiments of the present aspect may correspond with advantages and features of the separation system as described in the first aspect.

In a third aspect, the present invention relates to the use of a separation system as described in the first aspect, for separation of analytes from a sample for pharmaceutical industry, biotechnology or food-water-environmental control.

In yet another aspect, the present invention relates to a method for separating analytes of interest in a fluid sample based on interaction with a stationary phase. The method comprises providing a sample in a fluidic channel with a stationary phase allowing the sample to interact with the stationary phase, wherein providing the sample comprises providing the sample in the fluidic channel whereby Langmuir behavior and Anti-Langmuir behavior is introduced for the sample. Further method steps and advantages may correspond with the functionality of features of the separation system as described in the first aspect and their corresponding advantages.

In still another aspect, the present invention relates to a method for fabricating a separation system as described above, wherein the method comprises providing a fluidic channel, and providing in at least a first zone a first stationary phase adapted for introducing Langmuir behavior and providing in at least a second zone a second stationary phase adapted for introducing Anti-Langmuir behavior. Providing the first stationary phase and the second stationary phase may comprise providing different types of stationary phases. Providing the first stationary phase and the second stationary phase may comprise providing different packing of a stationary phase. Providing the first stationary phase and the second stationary phase may comprise selectively removing parts of the stationary phase. Selectively removing may comprise any of removing by radiation treatment or chemical treatment. Providing the first stationary phase and the second stationary phase may comprise selectively coating of the stationary phase.

In yet another aspect, the present invention relates to a controller for controlling a sample fluid flow in a separation system, the controller being programmed for alternatingly varying the fluid flow so as to induce Langmuir and anti-Langmuir behavior in the separation system.

By way of illustration, embodiments of the present invention not being limited thereto, a system according to a model with adsorbent surface covered with alternating adsorption sites behaving independently with each having Langmuir (L-model) or anti-Langmuir (AL-model) isotherm is described in more detail. Due to inter-coupling of the band broadening due to L/AL-model the resultant peak shows a highly reduced solute spreading. To model the transportation of solute though multi-sorption sites, the transport-dispersive model is used with a finite slice of sample being displaced though a porous medium. The numerical solution of the solute transport equation reveals significant dependence of solute spreading on the plate width and spacing of the solute in the column.

Whereas in the present example modeling is used for explaining features and characteristics of exemplary systems of the present invention, embodiments of the present invention are not limited thereby.

The results of this study provide a robust model to control the band broadening of the solute with an optimization technique to obtain a highly efficient set-up with minimum solute spreading.

In the present example, a heterogeneous surface equally divided into different sites is considered, where on each site the local adsorption applies where the equilibrium isotherm results from the independent contribution of the two types of adsorption sites. In this model the adsorption on one site of the surface is described by a classical Langmuir isotherm while adsorption on the complementary site of the surface follows anti-Langmuir isotherm behavior. Each of the site follows one of the two different kinds of adsorption isotherm that behave independently and occupies alternate sites. As mentioned above, since in most cases for single component adsorption, the Langmuir and anti-Langmuir isotherm are commonly occurring isotherms, so our proposed model accounts for the most relevant heterogeneous surface with most commonly occurring adsorption sites. The graphical representation of the isotherms and the corresponding peak shapes is shown in FIG. 1.

The non-linear adsorption relation of Langmuir/anti-Langmuir type as a function of adsorption site can be expressed as follows:

$$c_s(x,t) = \frac{K c_m(x,t)}{1 + b(x) c_m(x,t)}.$$

(4)

where,

$$b(x) = \begin{cases} b_L, & \text{for } x \in \text{Langmuir plate,} \\ -b_{AL}, & \text{for } x \in \text{anti-Langmuir plate} \end{cases}$$

(5)

The constant $b_L$ is consistent with the adsorption-desorption equilibrium constant on the Langmuir site and $b_{AL}$ for the anti-Langmuir site. As stated before for the anti-Langmuir isotherm, this model is valid only for concentrations below $1/b_{AL}$. We define a non-dimensional parameter $\delta = b_L/b_{AL}$, as the ratio of non-linear adsorption parameters for Langmuir and anti-Langmuir isotherm.

In this study the surface is assigned with adsorption isotherm using the following simple approach:

- The adsorption surface is divided equally in Langmuir and anti-Langmuir sites called as plates, having equal width and are covering the column alternatively.
- We assume that there is no interaction of the adsorbed species of one type of site with the other. This assumption is easy to understand in adsorption of neutral molecules.
- The associated equilibrium constant K is assumed same for all the plates
- The associated non-linear adsorption parameter $b_L$ and $b_{AL}$ of the Langmuir and anti-Langmuir plates are independent of each other and depend on the threshold mobile phase concentration $c_{th}$ and thus on the porous matrix.

From now on this model will be referred to as Langmuir/anti-Langmuir model (LaL model). This model may be particularly advantageous in exploring the adsorption of solutes on the heterogeneous surfaces, for instance adsorption of surfactants during lubrication and coating processes. Our objective in this context is to achieve least peak tailing and hence present the optimal conditions for a system model to achieve high efficiency by reducing the band broadening. It must be mentioned that nonlinear adsorption conditions always result in peak tailing and are very common, not only in chromatography but unfortunately also in contaminant transport in subsurface. Since, the adsorbent i.e. solid phase may contain two or more different adsorption sites it is highly recommended to explore this nature of multi adsorption sites and thus finding ways to optimize the tailing effect.

The effects of the LaL model on the spreading dynamics of the adsorbed solute, using numerical simulation of the band profiles based upon the mass balance transfer model and LaL model isotherm. Further it will be shown that with suitable choice of parameters LaL model can be used to significantly reduce the solute spreading and thus could result in controlling the severe tailing of the profiles.

As the flow is uniform and the column is assumed to be radially homogeneous, the model used is unidimensional. All the column properties are constant in a given cross section. Thus, the mass balance equations have two independent variables, the time t and the column length x. We shall consider two functions of these variables, the concentrations cm in the mobile phase and $c_s$ in the stationary phase.

$$\frac{\partial c_m}{\partial t} + F\frac{\partial c_s}{\partial t} + U\frac{\partial c_m}{\partial x} = D\frac{\partial^2 c_m}{\partial x^2}. \tag{6}$$

where $\partial$ is the partial derivative.

Here, $F = V_s/V_m$ i.e., the phase volume ratio, D is the dispersion coefficient and U is the injection velocity. After substituting $c_s$ for the LaL model relation equation (4), the mass balance equation (6) reduces to

$$\frac{\partial}{\partial t}\left(1 + \frac{k}{(1 + b(x)c_m(x,t))}\right)c_m(x,t) + U\frac{\partial c_m(x,t)}{\partial x} = D\frac{\partial^2 c_m(x,t)}{\partial x^2} \tag{7}$$

The initial and boundary condition for the concentration are now discussed.

The initial mobile phase concentration $c_m(x,0)$ is assumed to be

$$c_m(x,0) = \begin{cases} c_{th}/\alpha, & \text{for } |x| \leq W_s/2, \\ 0, & \text{elsewhere,} \end{cases} \tag{8}$$

Where $W_s$ is the width of the injected sample and a > 1. The initial concentration is always assumed to be lesser than $c_{th}$ to avoid the divergence due to anti-Langmuir adsorption. The fluid is injected with an initial injection velocity U. The boundary conditions, imposed on concentration and velocity are:

$$u = U, \quad \frac{\partial c_m(x,t)}{\partial x}, \quad \text{as } |x| \to \infty$$

(9)

To nondimensionalize the governing equations, the concentration $c_{th}$ is chosen to nondimensionalize $c_m$, $b_L$ and $b_{AL}$, and U as the characteristic velocity. Defining the length scale $L_c = D/U$ and a time scale $t_c = D/U^2$, the non-dimensional quantities are then obtained as non-dimensionalized velocity, length and time are

$$\hat{U} = U/U = 1, \hat{x} = x/(D/U), \hat{t} = t/(D/U^2)$$

The non-dimensional concentration and adsorption parameters are

$$\hat{c}_m = c_m/c_{th}$$

$$\hat{b}_L = b_L c_{th} = b_L/b_{AL} = \delta$$

$$\hat{b}_{AL} = b_{AL} c_{th} = b_{AL}/b_{AL} = 1$$

$$\hat{c}_s = c_s/c_{th} = \begin{cases} \dfrac{K\hat{c}_m}{1 + \delta\hat{c}_m}, & \text{if } x \in \text{Langmuir plate,} \\ \dfrac{K\hat{c}_m}{1 - \hat{c}_m}, & \text{if } x \in \text{anti-Langmuir plate,} \end{cases}$$

After implementing the above non-dimensionalisation, the mass balance equation becomes:

$$\frac{\partial}{\partial \hat{t}}\left(1 + \frac{k}{(1 + \hat{b}(x)\hat{c}_m(x,t))}\right)\hat{c}_m(x,t) + \frac{\partial \hat{c}_m(x,t)}{\partial \hat{x}} = \frac{\partial^2 \hat{c}_m(x,t)}{\partial \hat{x}^2}$$

(10)

Where,

$$\hat{b}(x) = \begin{cases} \delta, & \text{for } x \in \text{Langmuir plate,} \\ -1, & \text{for } x \in \text{anti-Langmuir plate} \end{cases}$$

(11)

This can be further simplified as (and dropping the punctuation symbol '):

$$\left(1 + \frac{k}{(1 + b(x)c_m(x,t))^2}\right)\frac{\partial c_m(x,t)}{\partial t} + \frac{\partial c_m(x,t)}{\partial x} = \frac{\partial^2 c_m(x,t)}{\partial x^2}$$

(12)

Let

$$\kappa = \left(1 + \frac{k}{(1+b(x)c_m(x,t))^2}\right)$$

so above equation can be rewritten as after separating the spatial and time derivatives:

$$\frac{\partial c_m(x,t)}{\partial t} = \frac{1}{\kappa}\frac{\partial^2 c_m(x,t)}{\partial x^2} - \frac{1}{\kappa}\frac{\partial c_m(x,t)}{\partial x}$$

(13)

The non-dimensional initial concentration is discussed below.

$$c_m(x,0) = \begin{cases} 1/\alpha, & \text{for } |x| \leq W/2, \\ 0, & \text{elsewhere,} \end{cases}$$

(14)

where $W = UW_s/D_x$ is the non-dimensional width of the injected sample.
The initial total solute concentration varies from 0 in the pure displacing fluid to

$$\frac{\varepsilon_{tot}}{\alpha}\left(1 + \frac{k}{1-1/\alpha}\right):$$

in finite width sample, if any one or both the interfaces lie in the anti-Langmuir plate. It varies from 0 in pure displacing fluid to

$$\frac{\varepsilon_{tot}}{\alpha}\left(1 + \frac{k}{1+\delta/\alpha}\right)$$

in finite slice sample, if both the interface lie in the Langmuir plate. The width of each plate is defined by $L_p$, which is taken to be same for the Langmuir and anti-Langmuir sites.
The numerical method applied is discussed below.
The solute mass balance equation 13 is a partial differential equation with variable coefficients. Therefore this equation is solved using Fourier Pseudo-spectral method. The Fourier series expansion of $c_m(x; t)$ and RHS of equation 13 is taken as:

$$c_m(x,t) = \sum_p \hat{c}_p(t)e^{i(k_p x)}$$

(15)

$$J(x,t) = \frac{1}{\kappa}\left\{\frac{\partial^2 c_a}{\partial x^2} - \frac{1}{\kappa}\frac{\partial c_m}{\partial x}\right. = \sum_p \hat{f}_p(t).e^{i(k_p x)}$$

(16)

where $k_p = 2\pi p/L_x$; (p = 0,1,2...) are the wave number of Fourier modes. The Fourier coefficients p are calculated by Fast Fourier Transform with $c_m(x; t)$ known at the collocation points $x_p = (p/M)L_x$, p = 0, 1, 2... M-1, for M number of spectral modes and L is the computational length. For applying this Fourier-spectral method for the computational purpose without loss of generality periodic boundary conditions can be taken for $c_m(x,t)$ in the computational boundary. The equation (13) in Fourier space reduces to a first order ordinary differential equation in time,

$$\frac{d\hat{c}_p}{dt} = \hat{J}_p$$

(17)

The solution of the above equation (17) is obtained by a predictor-corrector method. The second order Adams-Bashforth is used to predict the concentration of solute and the predicted value is corrected by trapezoidal rule. Stability is observed to be achieved at dx = 1, dt = 0,02 which is verified by measuring the solute mass conservation giving constancy of the area under the curve for c. A higher accuracy can be achieved in spectral methods for coarser mesh that also lead to little or no artificial dissipation. There are a number of nondimensional parameters and variables $\alpha$, $L_p$, W, $\delta$, k and $L_p$ involved in our model that set the initial concentration $c_{m0}$, rate of adsorption and describe the flow dynamics of the system i.e., the propagation pattern of the solute, its spreading dynamics and variance, for instance. In addition to this, the initial position of the slice (represented as $x_{in}$) is also observed to play a crucial role in determining the spreading dynamics of the adsorbed solute.

The parameter values are discussed below.

Since, there are a number of variables involved in our model, we combine variables whose influence on the propagation dynamics of the solute is observed to be depended on each other. This helps in making system less complicated and easy to understand. The final parameters that describe the system and there values used in simulations are:

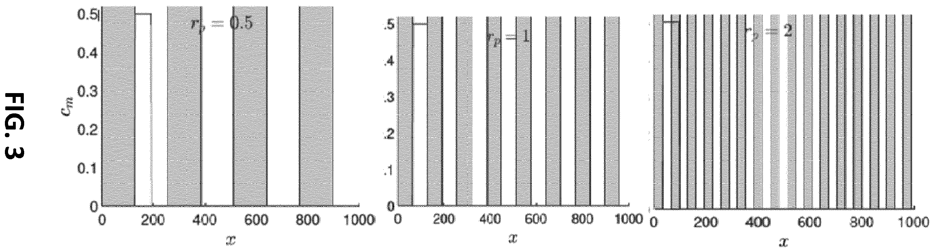

- $\alpha$ =2, which sets the initial mobile phase concentration $c_{m0}$ = 0.5.
- The ratio of width of the solute slice W with $L_p$ is $r_p$ = W/$L_p$ (See FIG. 3, showing the geometry of the column with different values of $r_p$ =W /$L_p$ as a function of $c_m$. For a fixed value of W = 64, the increase in rp depicts decreasing plate width, thus the spatial distribution shows large number of plates for large $r_p$ ($r_p$ = 0.5 at the left, $r_p$ = 1 at the middle, $r_p$ = 2 at the right).
- The influence of retention parameter k is studied for k = 1 and 5.
- The solute dynamics for a given value of $x_{in}$ is observed to repeat pattern after 2* $L_p$. So $x_{in}$ is varied as $L_p$ + $r_d$ *$L_p$ with $r_d$ being an element of [0,2] (see FIG. 2).
- In simulations $r_p$ within (0,1] $\cup$ ($2^0$ , $2^5$]. $r_p$ = (0,1] is called as Phase 1 which represent the case with sample width lesser than the plate width. Phase 2 is $r_p$ = ($2^0$, $2^5$], which represent the case with sample width larger than the plate width.
  Simulation run for t = 50000, W = 64, $L_x$ = 32768. So the column to sample ratio is
  W/Lx = 0.002, which is equivalent to the experimental conditions.

Therefore, the parameters on which the flow dynamics of the solute is dependent are reduced to $\delta$, k, $r_p$ and $r_d$. In the next section we discuss the results obtained showing the influence of these parameters on the propagation and spreading dynamics of the solute.

The results of the simulations are now discussed.

By numerical simulations the influence of alternation of Langmuir/anti-Langmuir plates in the system is shown, where one can appreciate the variety of obtained solute peaks and its influence on spreading dynamics. With this set up, the nonlinear effects are considerably amplified and a variety of situations may be encountered, depending upon the values of relative nonlinear adsorption parameters $b_L$, $b_{AL}$, which in our case is reduced to $\delta$, retention parameter k, the position of the injected sample at t = 0 depicted by parameter $r_d$ and the width of the plate depicted by parameter $r_p$. The influence of $r_p$ on the solute peak shape and spreading is discussed below.

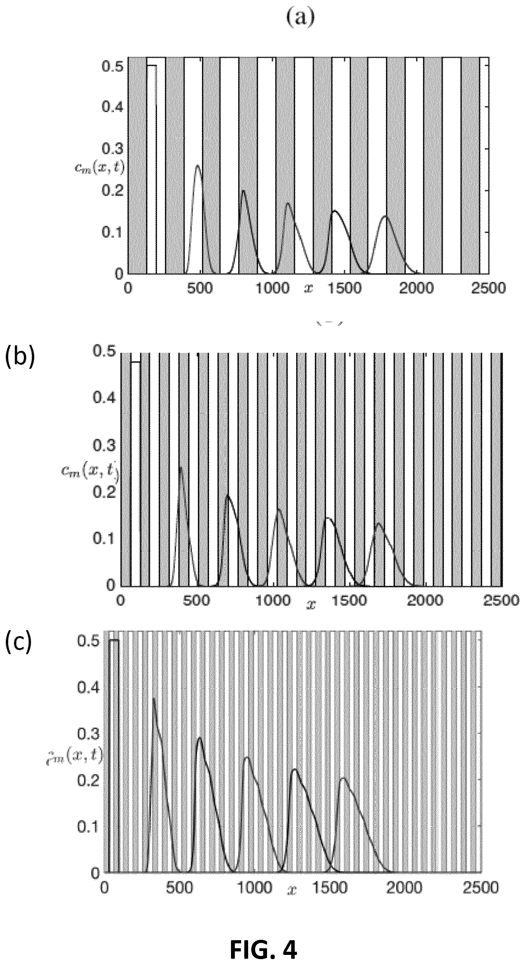

FIG. 4 shows the concentration profile of the solute in mobile phase $c_m$ under different sets of values of $r_p$ with k = 5, $b_L$ = $b_{AL}$ = 1, $r_d$ = 0. In particular, FIG. 4 it shows the concentration profile in mobile phase $c_m$ with $r_d$ = 0 for (a), $r_p$ = 0.5 (b), $r_p$ = 1 (c) $r_p$ = 2 at times t = 0, 1000, 2000, 3000, 4000, 5000 time units. One can readily observe the complexity of the behaviour exhibited by the solute with LaL model, and it is far from the standard Langmuir or anti- Langmuir behaviour. These propagation dynamics can be explained by the fact that the Langmuir and anti-Langmuir plates behave opposite to each other. The frontal solute interface which undergoes contraction in the Langmuir plate, is confronted with expansion in the anti-Langmuir plate and vies-versa for rear solute interface.

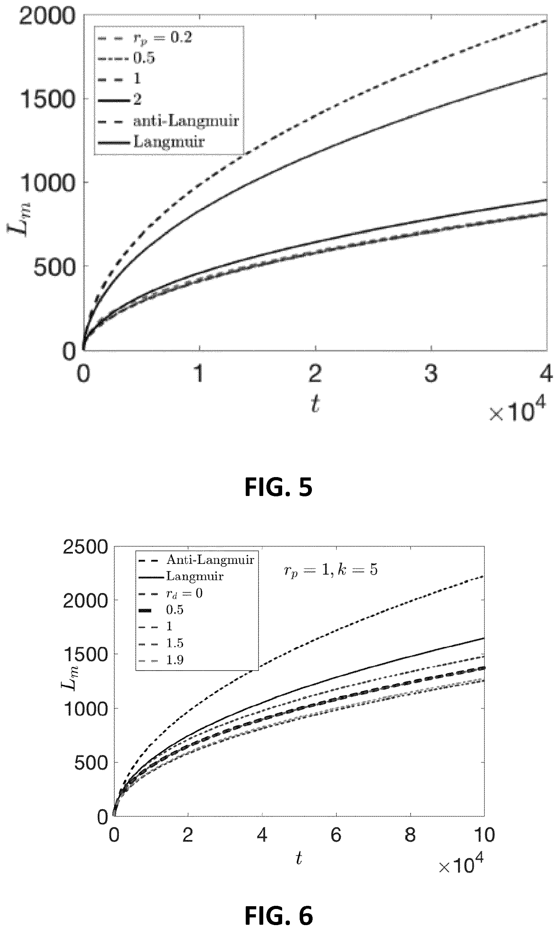

The shape of the solute peak depends on the ratio of the sample width to the plate width. i.e. $r_p$. When the plate width is greater than sample width i.e. $r_p$ < 1, the solute peak shape is anti-Langmurian in AL-plate and smoothly switches to Langmurian in L-plate (see FIG. 4(a)-(b)). On the contrary, when $r_p$ > 1, the solute concentration distribution encounter with continuous expansion/contraction whenever the plate switch happens. Thus the transition from L-plate to AL-plate is rapid, which affects the smoothness of the peak and they become undulated (see FIG. 4(c)). The spreading length, $L_d$ is a good quantitative measure to analyze the influence of LaL model on the transport dynamics of the adsorbed solute. $L_d$ is measured as the length of the interval for which the solute concentration $c_m \geq 0.001$ and plotted in FIG. 5.

In detail, FIG. 5 shows the spreading length of adsorbed solute for different values of $r_p$, at a fixed $r_d = 0$, k = 5, $\delta = 1$.

It is clearly observed that the solute spreading for LaL model is much lesser than the single site adsorption of Langmuir or anti-Langmuir type for any value of $r_p$.

The influence of $r_d$ on the solute peak shape and spreading is discussed below.

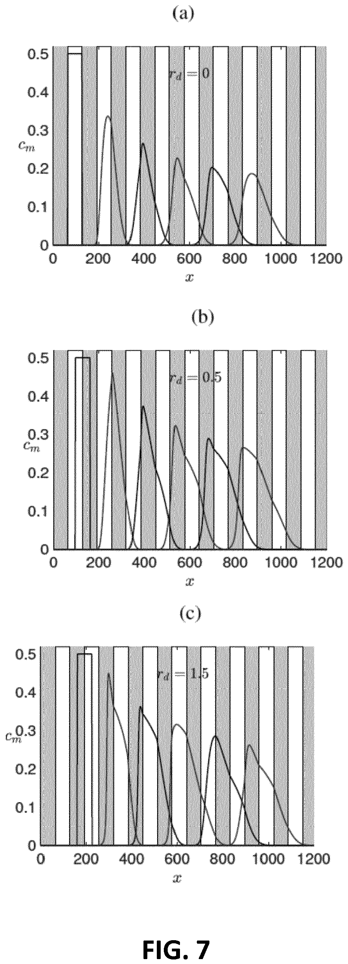

In LaL model the initial position of the sample $x_{in}$ influences the peak profile and the spreading dynamics of the adsorbed solute. In order to prove this we plot the concentration profile of solute in FIG. 7 for different values of rd with k = 5, $b_L = b_{AL} = 1$, $r_p = 1$. As explained in FIG. 2 the initial position of the sample is varied by the non-dimensional parameter $r_d < [0;2)$. The pattern will start repeating itself after $r_d \geq 2$ because sample will start encountering the same neighbourhood conditions. It is clearly observed in FIG. 7 that the solute dynamics are largely affected by the initial position of the sample. It will be interesting to note the influence of the initial position on the spreading length of the solute. The spreading length $L_m$ is plotted in FIG. 6 and shows $L_m$ for LaL model to be always lesser than single site Langmuir or anti-Langmuir. However, within the LaL model $L_m$ varies with $r_d$. It is observed that $L_m$ is grows non-monotonically with $r_d$ i.e., for $r_d < 1$ $L_m$ increases with $r_d$, but for $1 < r_d < 2$ $L_m$ decreases with $r_d$. It is an interesting observation to note, as we infer from this that the solute carries its history with it for a long time while in LaL isotherm model. So, the initial position of the sample also plays a significant role in determining the band-broadening of the solute. The influence of k on the solute spreading is now discussed.

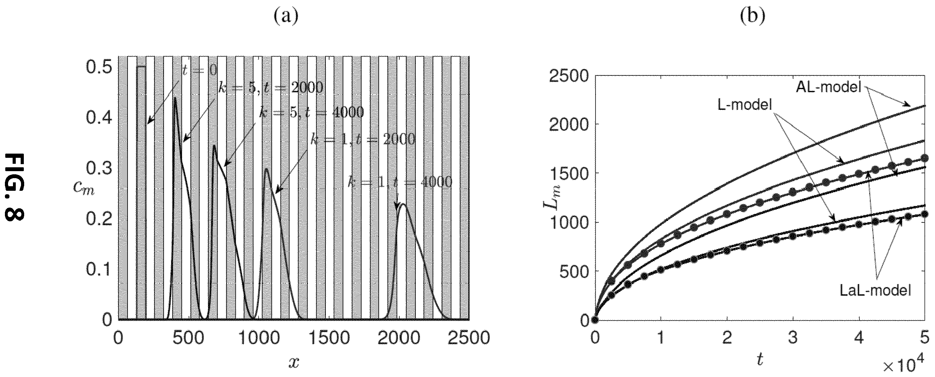

It is well known that retention parameter plays a crucial role in the propagation of the solute. The larger the value of k, the more the solute concentration is retained more on the porous matrix and thus slower it propagates in comparison to smaller values of k. This influence of k makes it an interesting parameter to study in LaL model. As for large values of k, the sample will interact with the alternating plates more and thus will be more influenced by the multiple adsorption site model in comparison to the small values of k. In order to analyse the influence of k on the transport dynamics of the solute in LaL model, the concentration profile of $c_m$ is plotted in FIG. 8(a) for k = 1 and 5 at different times keeping $r_p$ and $r_d$ fixed. It is evident from visual inspection that the solute peaks for k = 5 is quite different from k = 1. Undoubtedly, k = 1 cover more LaL plates than k = 5, but the interaction time of the solute with the corresponding plates also plays a crucial role in determining the band broadening which is more for k = 5. In order to analyze this the spreading length of the adsorbed solute for different values of k is plotted in FIG. 8(b). $L_m$ is observed decrease for LaL model irrespective of the value of k. Thus, for the applications where reducing the band broadening of the solute is essential enough to increase the efficiency of the method, LaL-model provides a robust mechanism to reduce the spreading of the solute and thus increasing the efficiency of the process involved therein. However, to analyze the amount of reduction we achieve by k = 5 in comparison to k = 1 demand more quantitative analysis and is discussed in below. Kinetic tailing will be especially prominent at high velocities. If one takes two zones of equal width at half height, one at a selected high velocity where rate effects dominate and another at a low velocity where longitudinal diffusion effects are of equal magnitude, the high velocity zone will show more tailing.

The influence of $\delta$ on the solute spreading

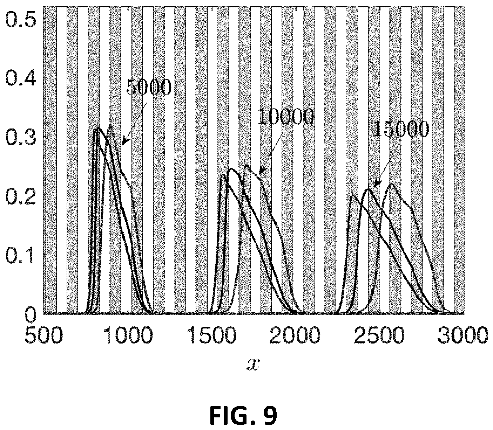

The non-dimensional parameter $\delta = b_L / b_{AL}$ determines the nonlinear adsorption strength anti-Langmuir plate to the Langmuir plate is an important parameter to understand the variation in peak shape while transporting through multiple plates. For instance, if $\delta = 1$ it implies $b_L = b_{AL}$, thus both the plates have equal affinity to the solute concentration. On the other hand if $\delta > 1$ the influence of L-plate is more pronounced than AL-plate otherwise for $\delta < 1$ AL-plates dominates the solute transport dynamics. To illustrate the effects of $\delta$ we plot the concentration profile of the solute in FIG. 9 for d = 0.5, 1, 2. Clearly the solute behaves differently for different $\delta$. For $\delta = 0.5$ the solute peak has more peak tailing at the front interface which shows the dominance of the AL-plate, whereas such peak tailing is much reduced in profiles with $\delta = 2$ which shows the L-plate dominance. An interesting question which arise from this is how does LaL model affects the spreading length of the solute when the plates have different affinity parameter i.e. $\delta$ different from 1. This question is answered below A quantitative analysis and optimization is given below.

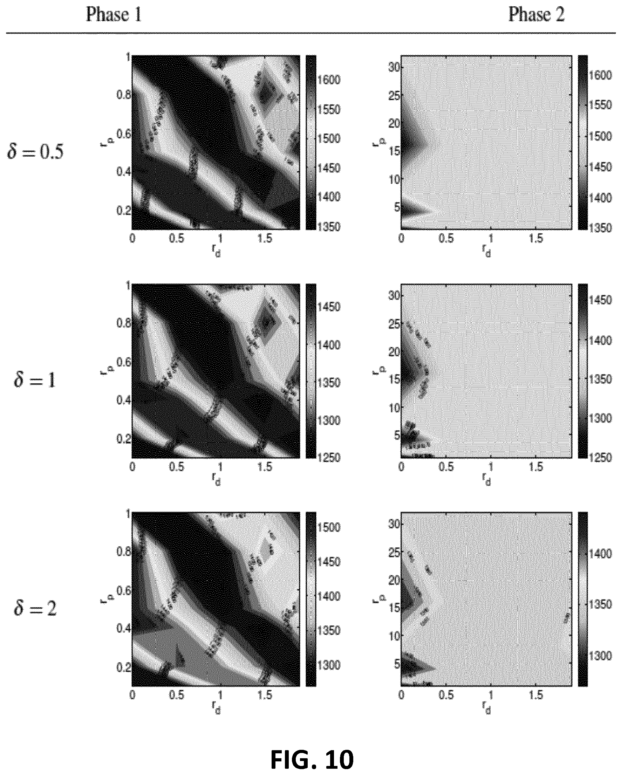

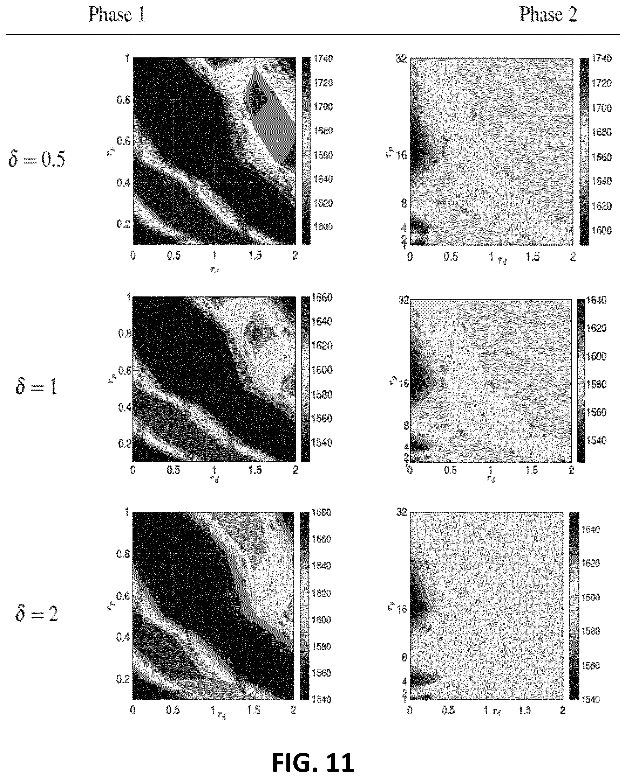

From the above sections it is clear that the global features of the flow, such as the spreading of the solute, are largely controlled by adsorption parameters (k, $\delta$). However, further dimensionless parameters that arise from the alteration of Langmuir/anti-Langmuir plates i.e. $r_p$, $r_d$ result in significant effects as well. In order to quantify the combined influence of varying values of $r_p$ and $r_d$, we plots the phase diagrams (FIG. 10 and 11) of the spreading length $L_m$ at a fixed time. Phase diagrams illustrate the variations of $L_m(t = t_{fin})$ as it is related to nondimensional parameters $r_p$ and $r_d$. Phase diagrams plots $r_p$ versus $r_d$ typically for fixed k and $\delta$. The grey values on the graph represent the values of spreading length $L_m$ at a fixed time t = $t_{fin}$. These colors represent the combinations of $r_p$ and $r_d$ at which $L_m$ is changing value. In other words these colors define the range of values of $L_m(t = t_{fin})$. The range of values for which $L_m$ is maximum and the range of combination of $r_p$ and $r_d$ which results in the least spreading length are shown. The values corresponding to the grey scale phases is shown in the color bar, with each grey value having a certain value but the pattern of maximum with red and minimum with blue is kept constant. A quantitative analysis for k = 5 is given.

FIG. 10 shows the phase diagram of $L_m(t = t_{fin})$ for different values of d. For quantitative analysis of the impact of LaL model on the spreading of the solute, we compare the spreading length $L_m$ for single site model (i.e., Langmuir model and anti-Langmuir model) with the least and maximum spreading obtained with LaL-model. A point to be noted is that in order to compare the impact of changing d with a single site model we take fixed bAL = 1 and change values of $b_L$ to get different values of $\delta = b_L / b_{AL}$. In other words, for $\delta$ = 0.5, 1, 2 we have $b_L$ = 0.5, $b_{AL}$ = 1, $b_L$ = 1, $b_{AL}$ = 1, and $b_L$ = 2, $b_{AL}$ = 1 respectively. In FIG. 10 the phase diagram shows large variation for Phase 1 i.e., for rp $\leq$ 1 for all values of rd and $\delta$. Thus depicting that for the system with plate width $L_p$ larger than the sample width W, the influence of $r_d$ is more pronounced on the solute spreading. Whereas, for $r_p$ > 1, the spreading length remains in a particular grey scale zone for $r_d$ > 0:5. However, in all the cases a quantitative comparison of the spreading with the single site adsorption is done to evaluate the % reduction in spreading for LaL model over L-model or AL-model.

For $\delta$ = 0.5 the spreading length, $L_m$, of the sample with W = 64 at t = $10^5$ (i.e. t=100000) is: For Langmuir adsorption with b = 0.5: $L_m(t = 10^5)$ = 1463.

For Anti-Langmuir adsorption with b = 1: $L_m(t = 10^5)$ = 2225.
Hence up to 26.7% decrease in spreading of the sample with LAL-model is achieved.

For $\delta$ = 1
For Langmuir adsorption with b = 1: $L_m(t = 10^5)$ = 1645.
For Anti-Langmuir Adsorption with b = 1: $L_m(t = 10^5)$ = 2225.
Hence the % decrease in spreading of sample with LAL-model is 33.48% - 43.82% from the Anti-Langmuir adsorption and 10.03% - 24.01% from Langmuir adsorption.
For $\delta$ = 2
For Langmuir adsorption with b = 2: $L_m(t = 10^5)$ = 1876.
For Anti-Langmuir adsorption with b = 1: Lm(t = $10^5$) = 2225.
Hence up to 42.92% decrease in spreading of the sample with LAL-model is achieved.
A quantitative analysis for k = 1 is given below
Since, with k = 1 the solute is more weakly adsorbed in comparison to k = 5. Hence, in the solute advects more in the direction of the flow. Thus with k = 1 the modification of the solute profile occurs in a much lesser time than k = 5 therefore, we analyze the influence of LaL model on $L_m$ taking $t_{fin}$ = $5^4$.
For $\delta$ = 0.5
For Langmuir adsorption with b=0.5: $L_m(t =50000)$= 1663.
For Anti-Langmuir adsorption with b = 1: $L_m(t = 50000)$ = 2192.
Hence up to 27.6% decrease in spreading of the sample with LAL-model is achieved.
For $\delta$ = 1
For Langmuir Adsorption: $L_m(t = 50;000)$ = 1830.
For Anti-Langmuir Adsorption: $L_m(t =50;000)$=2192.
Hence the % decrease in spreading of sample with LAL-model is 24.27% - 30.47% from the Anti-Langmuir adsorption and 9.29% - 16.72% from Langmuir adsorption.
For $\delta$ = 2
For Langmuir adsorption with b = 2: $L_m(t = 50000)$ = 2096.
For Anti-Langmuir adsorption with b = 1: $L_m(t = 50000)$ = 2192.
Hence up to 29.74% decrease in spreading of the sample with LAL-model is achieved.
The aim of the current experiments was to design optimal shapes of chromatographic column or optimal configurations for practical engineering applications related to oil recovery, CO2 storage and contaminant transport to achieve the goal of high recovery rate by reducing the mixing length of the solute. Although LaL model always results in a lesser solute spreading than classic single site models. However, improving the performance of an existing configuration often involves optimal plate width to sample width ratio, optimal placement of the sample in the column and relative strengths of the Langmuir/anti-Langmuir plates. As stated previously different combinations of $r_p$ and $r_d$ affect dramatically the performance of the LaL model. In these circumstances, we explore a large number of different configurations for a maximum output efficiency. The range of parameters for maximal reduction in spreading are:
Combinations of $r_d$ and $r_p$ for least band broadening are

- For $r_d$ within [0, 0.5], rp within (0,0.2]U[0.8, 1]U(8, 32).
- For $r_d$ within [0.5, 1.5], rp within [0.4, 0.8].
- For $r_d$ within [1.5, 2], rp within (0, 0.4].

Influence of k on the spreading of solute shows LaLmodel give better reduction in spreading length for k = 5 in comparison to k = 1.
It is observed that for $r_p$ < 1 spreading depends significantly on $r_d$. On analyzing the data we observed that minimum spreading is obtained when

$$r_d \text{ within } +50\% \, L_{plate} : -50\% \, AL_{plate} \qquad (18)$$

$$r_f = r_d + r_p \text{ within } +50\% \, AL_{plate} : -50\% L_{plate} \qquad (19)$$

The above simulations and experimental data illustrate a model with two-site adsorption called LaL-model, covering the column alternatively which help in better understanding the importance of the nature of the adsorbent and the key role of multiple site adsorption in the spreading dynamics of the solute. The influence of LaL-model on the resolving power of the separation processes is one to the crucial finding of this model. The examples provided show that the width of the plates, solute spacing and retention parameters can have significant effect on the ultimate spreading of the solute in the system. The optimal spacing for the plate width and placing of the solute sample results in highly efficient model with reduced spreading. For $\delta < 1$ the dominance of AL-plate is integrated to the entire peak and hence a dominant peak tailing is observed in comparison to $\delta > 1$. As a whole, optimization of configurations involving the alternation of L-model and AL-model to form a multi-adsorption site model remains a fairly new field of research. For the development of this theoretical model, a difficulty can be encountered due to lack of well-defined surface compositions and authentic surfaces. However, with the advent of micro-pillars it is possible to fabricate a perfectly aligned micropillar array chips and thus can be used to create the LaL model to obtain a highly efficient output of the separation process with decrease in the band broadening. In the coming years an increase in interests of the field of chiral separations with importance to many diverse and critical industries such as the pharmaceutical, agrochemical, petrochemical, and food industry ensures future use and development of such LaL model.

**Claims**

1. A separation system for separating analytes of interest in a fluid sample based on interaction with a stationary phase, the separation system comprising

   - a fluidic channel,
   - a stationary phase in the fluidic channel arranged for interacting with the sample, when the sample passes the fluidic channel,

   wherein the separation system is adapted for inducing for the sample of interest in the fluidic channel at least part of its residence time in the fluidic channel Langmuir behavior and at least part of its residence time in the fluidic channel Anti-Langmuir behavior.

2. A separation system according to claim 1, wherein the separation system is adapted for inducing for the sample of interest during its residence time in the fluidic channel alternatingly Langmuir behavior and Anti-Langmuir behavior.

3. A separation system according to any of the previous claims, wherein the separation system is adapted for spatially along the fluidic channel at least one zone with Langmuir behavior and at least one zone with Anti-Langmuir behavior.

4. A separation system according to claim 3,
   wherein the separation system is adapted for introducing spatially along the fluidic channel alternatingly zones with Langmuir behavior and zones with Anti-Langmuir behavior, and/or wherein the first spatial zone is a zone with Langmuir behavior, and/or
   wherein the width of the different spatial zones is selected for decreasing a spreading length of the concentration of the analytes.

5. A separation system according to any of claims 1 to 4, wherein the system comprises a controller for controlling a sample speed as function of time so as to introduce temporary Langmuir or anti-Langmuir behavior in the sample.

6. A chromatography system comprising a separation system according to any of claims 1 to 5.

7. Use of a separation system according to any of claims 1 to 5, for separation of analytes from a sample for pharmaceutical industry, biotechnology or food-water-environmental control.

8. A method for separating analytes of interest in a fluid sample based on interaction with a stationary phase, the method comprising
providing a sample in a fluidic channel with a stationary phase allowing the sample to interact with the stationary phase, wherein providing the sample comprises providing the sample in the fluidic channel whereby Langmuir behavior and Anti-Langmuir behavior is introduced for the sample.

9. A method for separating analytes according to claim 8, wherein providing the sample comprises providing a sample such that alternatingly Langmuir behavior and Anti-Langmuir behavior is introduced for the sample and/or wherein providing the sample comprises providing the sample in a fluidic channel comprising stationary phases introducing alternatingly zones of Langmuir behavior and zones of anti-Langmuir behavior.

10. A method for fabricating a separation system according to any of claims 1 to 5, wherein the method comprises

- providing a fluidic channel, and
- providing in at least a first zone a first stationary phase adapted for introducing Langmuir behavior and providing in at least a second zone a second stationary phase adapted for introducing Anti-Langmuir behavior.

11. A method for fabricating according to claim 10, wherein providing the first stationary phase and the second stationary phase comprises providing different types of stationary phases and/or comprises providing different packing of a stationary phase.

12. A method for fabricating according to claim 10, wherein providing the first stationary phase and the second stationary phase comprises selectively removing parts of the stationary phase.

13. A method for fabricating according to claim 10, wherein selectively removing comprises any of removing by radiation treatment or chemical treatment.

14. A method for fabricating according to claim 10, wherein providing the first stationary phase and the second stationary phase comprises selectively coating of the stationary phase.

15. A controller for controlling a sample fluid flow in a separation system, the controller being programmed for alternatingly varying the fluid flow so as to induce Langmuir and anti-Langmuir behavior in the separation system.

**FIG. 1**

**FIG. 2**

**FIG. 3**

FIG. 4

**FIG. 5**

**FIG. 6**

(a)

(b)

(c)

**FIG. 7**

FIG. 8

**FIG. 9**

Phase 1                                                                    Phase 2

$\delta = 0.5$

$\delta = 1$

$\delta = 2$

**FIG. 10**

Phase 1                                                    Phase 2

FIG. 11

Europäisches
Patentamt

European
Patent Office

Office européen
des brevets

## EUROPEAN SEARCH REPORT

Application Number

EP 18 19 5681

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/177200 A1 (RICHARDS DEAN JOHN [US]) 25 June 2015 (2015-06-25) * paragraphs [0009], [0025], [0027], [0028], [0032], [0033], [0035], [0042], [0043]; figures 3B,3C * | 1-14 | INV. G01N30/60 |
| A | RUSHD KHALAF ET AL: "Protein adsorption in polyelectrolyte brush type cation-exchangers", JOURNAL OF CHROMATOGRAPHY A, vol. 1471, 13 October 2016 (2016-10-13), pages 126-137, XP055530342, AMSTERDAM, NL ISSN: 0021-9673, DOI: 10.1016/j.chroma.2016.10.024 * page 127 - page 128 * | 1-14 | |
| A | GLENNE EMELIE ET AL: "Systematic investigations of peak deformations due to co-solvent adsorption in preparative supercritical fluid chromatography", JOURNAL OF CHROMATOGRAPHY A, ELSEVIER, AMSTERDAM, NL, vol. 1496, 22 March 2017 (2017-03-22), pages 141-149, XP029966642, ISSN: 0021-9673, DOI: 10.1016/J.CHROMA.2017.03.053 * page 142 * * page 144 - page 146 * * page 148; figure 1 * | 1-14 | TECHNICAL FIELDS SEARCHED (IPC) G01N |
| A,D | US 2005/167365 A1 (SCHRAMM HENNING [DE] ET AL) 4 August 2005 (2005-08-04) * paragraphs [0003] - [0007], [0018] - [0022] * | 1-14 | |

~~The present search report has been drawn up for all claims~~

| Place of search | Date of completion of the search | Examiner |
|---|---|---|
| Munich | 5 December 2018 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 18 19 5681

The Search Division considers that the present European patent application does not comply with the
requirements of unity of invention and relates to several inventions or groups of inventions, namely:

1. claims: 1-14

    Separation system with fluidic channel and stationary phase
    and being adapted to induce for a sample Langmuir and
    Anti-Langmuir behaviour.
    ---

2. claim: 15

    Controller  for controlling sample fluid flow to induce
    Langmuir and Anti-Langmuir behaviour for a sample.
    ---

## ANNEX TO THE EUROPEAN SEARCH REPORT
## ON EUROPEAN PATENT APPLICATION NO.

EP 18 19 5681

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2018

| Patent document cited in search report | | Publication date | Patent family member(s) | | Publication date |
|---|---|---|---|---|---|
| US 2015177200 | A1 | 25-06-2015 | NONE | | |
| US 2005167365 | A1 | 04-08-2005 | AT | 424907 T | 15-03-2009 |
| | | | DE | 10235385 A1 | 26-02-2004 |
| | | | EP | 1526907 A1 | 04-05-2005 |
| | | | US | 2005167365 A1 | 04-08-2005 |
| | | | WO | 2004014511 A1 | 19-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005167365 A1